# EUROPÄISCHE PATENTANMELDUNG

(11) **EP 0 895 394 A2**
(43) Veröffentlichungstag der Anmeldung: **03.02.1999**
(21) Anmeldenummer: 98202505.8
(22) Anmeldetag: 27.07.1998
(51) Int. Cl.: H04M 1/72

(54) **Mobilfunkgerät**

(30) Priorität: 02.08.1997 DE 19733530
(71) Anmelder: Philips Patentverwaltung GmbH, 22335 Hamburg (DE); Koninklijke Philips Electronics N.V., 5621 BA Eindhoven (NL)
(72) Erfinder: Bauer, Harald, Dipl.-Ing., Röntgenstrasse 24, 22335 Hamburg (DE); Bening, Andreas, Dipl-Ing., Röntgenstrasse 24, 22335 Hamburg (DE); Kempf, Peter, Dr.-Ing., Röntgenstrasse 24, 22335 Hamburg (DE)
(74) Vertreter: Volmer, Georg, Dipl.-Ing.

(57) **Zusammenfassung**

Die Erfindung betrifft ein Mobilfunkgerät mit wenigstens einem Steuerungsprozessor und wenigstens einem Signalverarbeitungsprozessor, die wenigstens zeitweise nicht in einem aktiven Betriebszustand sind. Um auf möglichst einfache Weise den Energieverbrauch des Mobilfunkgerätes zu reduzieren, ist eine Steuereinheit zur Auswahl von Betriebszuständen wenigstens für den Steuerungsprozessor und/oder den Signalverarbeitungsprozessor vorgesehen. Durch Verwendung einer separaten Steuereinheit können insbesondere zwei oder mehr gekoppelte Prozessoren oder andere Schaltungseinheiten des gesamten Mobilfunkgerätes unabhängig von einander gesteuert werden. Jede gekoppelte Einheit kann separat unmittelbar in einen eigenen Betriebszustand versetzt werden, um auf diese Weise nur die aktuell notwendigen Einheiten zu betreiben und so den Energieverbrauch zu reduzieren.

## Beschreibung

Die Erfindung betrifft ein Mobilfunkgerät mit wenigstens einem Steuerungsprozessor und wenigstens einem Signalverarbeitungsprozessor, die wenigstens zeitweise nicht in einem aktiven Betriebszustand sind.

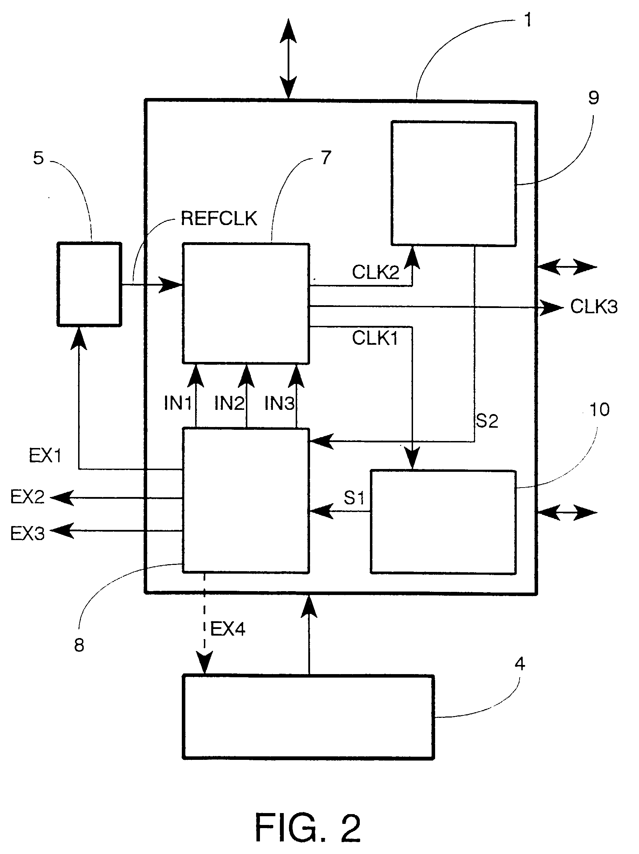

Ein solches Mobilfunkgerät ist aus der Schrift EP 0 343 528 bekannt, in der ein batteriegetriebenes Mobiltelefon beschrieben ist, daß hauptsächlich aus Kontrollteil und Funkteil besteht. Der Kontrollteil besteht aus einer Prozessoreinheit, die erste Kontrollfunktionen ausführt, und einer logischen LSI-Einheit (Large Scale Integration) für zweite Kontrollfunktionen. Dabei werden die ersten Kontrollfunktionen häufig nicht benutzt, sind aber kompliziert und erfordern einen schnellen Versorgungstakt. Die zweiten Kontrollfunktionen werden ständig benutzt und arbeiten häufig bei einem langsamen Versorgungstakt. Um den Energieverbrauch des Mobiltelefons zu verringern, führt die Prozessoreinheit die ersten Kontrollfunktionen immer nur dann aus, wenn eine Funktion ausgeführt werden muß. In der übrigen Zeit befindet sich die Prozessoreinheit in einem Ruhezustand (Holding State, Spalte 4, Zeilen 17 - 28). Bei Bedarf schaltet die LSI-Einheit die Prozessoreinheit in Abständen durch Anschalten eines schnellen Versorgungstaktes hinzu. Dazu muß die LSI-Einheit einen Teil ihrer Kapazität zur ständigen aktiven Überwachung der Prozessoreinheit aufwenden, indem die Notwendigkeit der Prozessoreinheit abgefragt wird (siehe Figur 2 mit zugehöriger Beschreibung, Spalte 4, Zeilen 29 - 34). Weiterhin kann die Prozessoreinheit nicht selbstständig aktiv werden, indem ein schneller Versorgungstakt direkt angefordert wird, sondern muß auf eine Zuteilung durch die LSI-Einheit warten. Insbesondere bei mehreren, unabhängig von einander arbeitenden Prozessoren ist die Überwachung der einzelnen Einheiten bei Mobiltelefonen nach dem Stand der Technik sehr aufwendig und für den Energieverbrauch des Mobiltelefons nicht die günstigste.

Die Aufgabe der Erfindung ist es daher, bei einem Mobilfunkgerät auf möglichst einfache Weise den Energieverbrauch zu reduzieren.

Die Aufgabe wird erfindungsgemäß dadurch gelöst, daß eine Steuereinheit zur Auswahl von Betriebszuständen wenigstens für den Steuerungsprozessor und/oder den Signalverarbeitungsprozessor vorgesehen ist. Durch Verwendung einer separaten Steuereinheit können insbesondere zwei oder mehr gekoppelte Prozessoren oder andere Schaltungseinheiten des gesamten Mobilfunkgerätes unabhängig von einander gesteuert werden. Jede gekoppelte Einheit kann separat unmittelbar in einen eigenen Betriebszustand versetzt werden, um auf diese Weise nur die aktuell notwendigen Einheiten zu betreiben und so den Energieverbrauch zu reduzieren. Die Steuereinheit kann dabei vorzugsweise durch eine festverdrahtete, kombinatorische und getaktete Logik realisiert werden, die besonders energiesparend arbeitet. Aber auch jede andere Realisierung bietet den erfindungsgemäßen Vorteil, ohne den Schutzbereich des Hauptanspruchs zu verlassen.

In einer vorteilhaften Weiterbildung der Erfindung besteht wenigstens der Steuerungsprozessor oder der Signalverarbeitungsprozessor aus wenigstens zwei Teilblöcken und ist die Steuereinheit zur Auswahl eines Betriebszustandes durch An-/Abschalten wenigstens eines Teilblockes vorgesehen. Die Prozessoren (oder andere schaltungstechnischen Einheiten) des Mobilfunkgerätes können in einzelne Teilblöcke (meist wenigstens in Prozessorkern und Ein-/Ausgabeeinheit oder Schnittstelle) gegliedert werden, die jeweils separat geschaltet werden können.

In einer Weiterführung des erfindungsgemäßen Mobilfunkgerätes ist wenigstens der Steuerungsprozessor oder der Signalverarbeitungsprozessor zur Übertragung von Anforderungssignalen über Signalbusse an die Steuereinheit vorgesehen. Über Signalbusse werden die Prozessoren mit der Steuereinheit gekoppelt. Durch Übertragung von Anforderungssignalen, die beispielsweise aus bestimmten Signalkombinationen auf dem Signalbus bestehen können, fordern die Prozessoren (oder andere schaltungstechnische Einheiten) einen bestimmten Betriebszustand an. Die Betriebszustände sind dadurch gekennzeichnet, welche Teilblöcke an- bzw. abgeschaltet sind.

Bei einer Ausgestaltung ist die Steuereinheit in Abhängigkeit von den Anforderungssignalen zur Auswahl der Betriebszustände durch An-/Abschalten von Versorgungstakten für die Teilblöcke vorgesehen. Da es sich bei den Teilblöcken insbesondere bei Mobilfunkgeräten meist um getaktete Prozessoren handelt, wird ein energiesparender Betriebszustand insbesondere durch Abschalten der Versorgungstakte erreicht. Da jeder Teilblock einen eigenen Versorgungstakt erhält, kann durch An- oder Abschalten der Versorgungstakte der jeweilige Teilblock an- oder abgeschaltet werden, und so die verschiedenen Betriebszustände für die Prozessoren und damit auch für das gesamte Mobilfunkgerät eingestellt werden.

Bei einer besonders geeigneten Ausführungsform der Erfindung besteht wenigstens ein Prozessor aus wenigstens einem, mit einem Prozessorkerntakt versorgten Prozessorkern und wenigstens einer, mit einem Schnittstellentakt versorgten Schnittstelle als Teilblöcke. Im Prozessorkern werden logische Operationen und Berechnungen ausgeführt. Die Schnittstelle ist die allgemeine Ein-/Ausgabeeinheit (I/O Unit) des Prozessors, die alle Aufgaben im Zusammenhang der Kommunikation mit anderen Einheiten des Mobilfunkgerätes bearbeitet. Beide Teilblöcke sind getaktete Einheiten und werden unabhängig voneinander über getrennte Zuleitungen mit einem Takt versorgt. Dabei kann die Frequenz des Prozessorkerntaktes auch von der des Schnittstellentaktes abweichen.

Für eine Fortbildung der Erfindung ist wenigstens ein Aufwachzähler zur Überwachung eines, durch abgeschalteten Prozessorkerntakt und Schnittstellentakt gekennzeichneten Betriebszustandes wenigstens eines Prozessors und zum Senden eines entsprechenden Anforderungssignales zum Wechsel in einen, durch angeschalteten Prozessorkerntakt und Schnittstellentakt gekennzeichneten Aktivzustand wenigstens eines Prozessors vorgesehen. Aufwachzähler sind getaktete Zähler, die zumeist mit einem Wert (Aufwachwert) beschrieben und dann dekrementiert werden, um jeweils bei bestimmten Zählerständen Aktionen zu initiieren. Der Aufwachwert gibt die Zeit an, in der der zugeordnete Prozessor nicht benötigt wird und daher durch Abschalten der Teilblöcke in einen Ruhe- oder Schlafzustand versetzt werden kann. Insbesondere bei Mobilfunkgeräten für TDMA-Mobilfunksysteme ist der Aufwachwert meist ein Vielfaches der Rahmenlänge (Frame), in der die Datenübertragung organisiert ist. Damit können in Abhängigkeit vom Zählerstand Steuerungsvorgänge innerhalb des Mobilfunkgerätes initiiert werden. Beispielsweise wird beim Zählerstand "Null" der Prozessor aktiviert, während bereits drei Rahmenlängen früher die Spannungsversorgung für mit diesem Prozessor gekoppelte Speicher (ROM) angeschaltet wird, so daß zum Aufwachzeitpunkt ein eingeschwungener Zustand vorliegt. Dazu sind einem Aufwachzähler ein oder mehrere Register zugeordnet, die mit bestimmten Zählerständen programmiert werden können. Ein Vergleicher vergleicht den aktuellen Zählerstand mit dem Registerinhalt und veranlaßt bei einer Übereinstimmung das Senden eines entsprechenden Anforderungssignals über den Signalbus an die Steuereinheit. Die Steuereinheit schaltet gemäß dem Anforderungssignal die benötigte Einheit des Mobilfunkgerätes an (zunächst den Versorgungstakt für den Speicher und beim entsprechenden Anforderungssignal für den Prozessor). Zusätzlich zum Aufwachzähler kann die Prozedur zum Anschalten eines Prozessors auch durch einen Interrupt bei einem unvorgesehenen Ereignis (zum Beispiel ein Verbindungsaufbau zu oder von einem anderen Teilnehmer) angestoßen werden. Diese wird dann vorzugsweise nach einem Anforderungssignal von der Schnittstelle von der Steuereinheit geregelt.

Bei einer bevorzugten Ausgestaltung der Erfindung ist die Steuereinheit bei abgeschaltetem Prozessorkerntakt und Schnittstellentakt für alle gekoppelten Prozessoren zum Abschalten eines Referenztaktes vorgesehen. Wenn alle Prozessoren, für die die Steuereinheit durch An-/Abschalten von Teilblöcken den Betriebszustand auswählt, nicht benötigt werden, kann auch der Oszillator abgeschaltet werden, der den Referenztakt liefert. Aus dem Referenztakt werden die Versorgungstakte gewonnen, die von der Steuereinheit für die einzelnen Teilblöcke an-/abgeschaltet werden. Insbesondere kann bei abgeschalteten Teilblöcken zwischen den zwei Betriebszuständen Ruhe- und Schlafzustand der Prozessoren unterschieden werden, wobei der Schlafzustand dadurch gekennzeichnet ist, daß zusätzlich die Möglichkeit des Abschaltens des Referenztaktes erlaubt wird.

Ein Ausführungsbeispiel eines erfindungsgemäßen Mobilfunkgerätes soll im folgenden anhand von Zeichnungen näher erläutert werden. Dabei zeigen:
- Figur 1:: ein Blockschaltbild eines Mobilfunkgerätes,
- Figur 2:: ein detaillierteres Blockschaltbild einer Basisband-Einheit des Mobilfunkgerätes mit zwei Prozessoren und einer gekoppelten Steuereinheit und
- Figur 3:: ein Blockschaltbild zur Darstellung der Auswahl von Betriebszuständen durch An-/Abschalten von Versorgungstakten für Teilblöcke in einem Steuerungsprozessor.

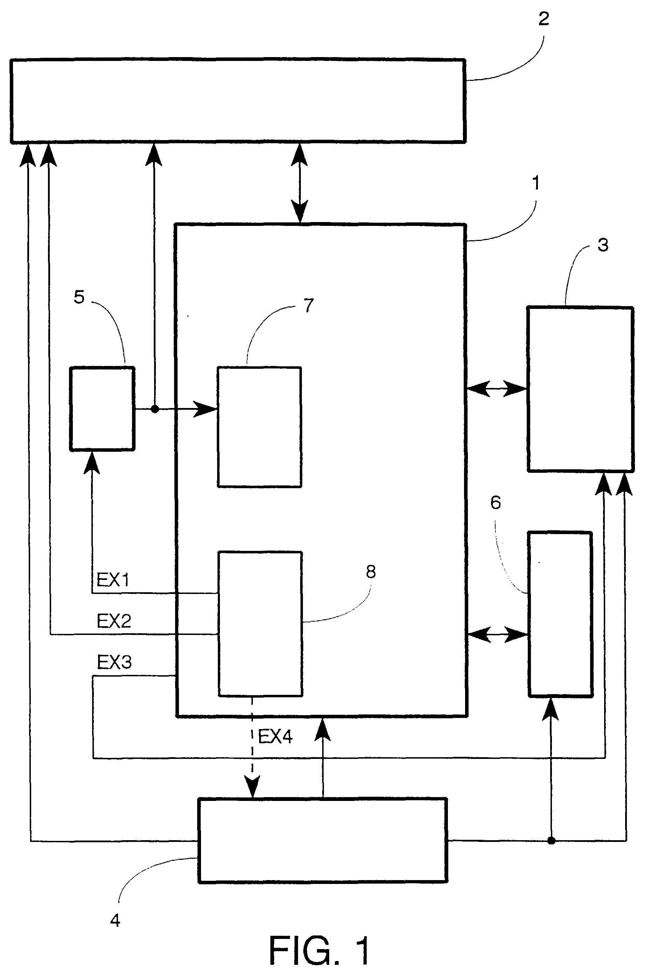

Das in der Figur 1 dargestellte Mobilfunkgerät besteht aus einer Basisband-Einheit (baseband unit, BBU) 1, einer Hochfrequenzeinheit 2, einem Man-Machine-Interface (MMI) 3 und einer Spannungsversorgung 4, die jeweils in der durch die Pfeile angedeuteten Weise miteinander gekoppelt sind. Weiterhin ist ein Speicher 6 und ein Oszillator 5 vorgesehen, der mit einer Taktgenerierungseinheit (clock generation unit, CGU) 7 innerhalb der Basisband-Einheit 1 verbunden ist. Eine Steuereinheit 8 in der BBU 1 ist über Leitungen EX1, EX2 und EX3 mit dem Oszillator 5, der HF-Einheit 2 und dem MMI 3, sowie optional über eine Leitung EX4 (gestrichelter Pfeil) mit der Spannungsversorgung 4, verbunden.

Die Spannungsversorgung 4 liefert Spannung für die HF-Einheit 2, das MMI 3, die BBU 1 und den Speicher 6. Die BBU 1 ist zur Verarbeitung der über ein Mobilfunksystem zu übertragenden Daten mit der HF-Einheit 2, dem Speicher 6 und dem MMI 3, zu dem insbesondere zumindest ein Mikrophon und ein Lautsprecher gehören, verbunden (siehe Doppelpfeile in Figur 1). Der Oszillator 5 liefert den Referenztakt REFCLK an die HF-Einheit 2 und die CGU 7.

In der Figur 2 ist die Basisbandband-Einheit 1 detaillierter dargestellt. Ein Signalverarbeitungsprozessor 9 für die Signalverarbeitung im Basisband und ein Steuerungsprozessor 10 zur Systemsteuerung erhalten von der CGU 7 jeweils einen Versorgungstakt CLK1 und CLK2, die aus dem Referenztakt REFCLK abgeleitet werden. Die zusätzliche Taktleitung deutet an, daß weitere unabhängige Einheiten im Mobilfunkgerät mit einem Versorgungstakt CLK3 betrieben werden können. Über die Signalbusse S1 und S2 übertragen die Prozessoren jeweils ihre Anforderungssignale, die auch aus Signalkombinationen bestehen können, für den benötigten Versorgungstakt CLK1 bzw. CLK2 an die Steuereinheit 8. Eine getaktete und kombinatorische Logik in der Steuereinheit 8 bildet in Abhängigkeit der Anforderungssignale externe und interne Steuersignale EX1, EX2, EX3, EX4 bzw. IN1, IN2, IN3. Die internen Steuersignale IN1, IN2, 1N3. sind jeweils Schaltern für die Versorgungstakte CLK1, CLK2 und CLK3 zugeordnet. Das externe Steuersignal EX1 schaltet den Referenztakt REFCLK des Oszillator 5 bei Bedarf ab. Mittels der externen Steuersignale EX2 und EX3 kann die HF-Einheit 2 bzw. das MMI 3 gesteuert werden. Die Steuerung der Spannungsversorgung 4 durch die Steuereinheit 8 über das externe Steuersignal EX4 kann zusätzlich vorgesehen werden. Dadurch kann die Höhe der Spannung in Abhängigkeit von der im aktuellen Betriebszustand benötigten Frequenz der Versorgungstakte geregelt werden, so daß ein minimaler Energieverbrauch des Mobilfunkgerätes erreicht wird.

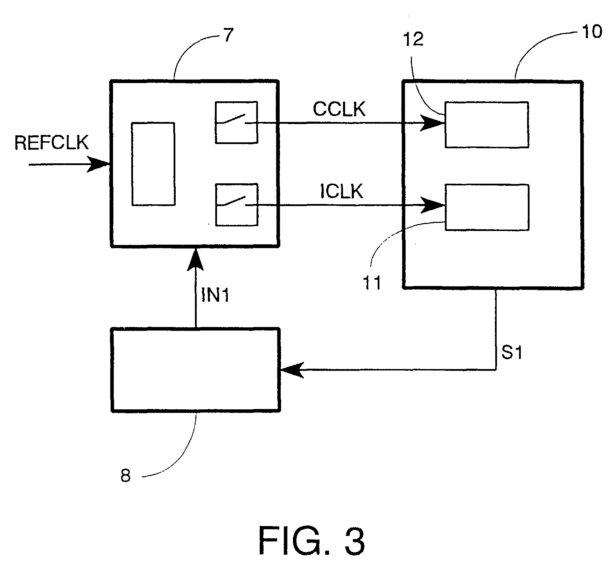

In der Figur 3 ist die Auswahl eines Betriebszustandes für einen Prozessor durch An-/Abschalten von Teilblöcken anhand des Steuerungsprozessors 10 dargestellt. Der Steuerungsprozessor 10 besteht aus den Teilblöcken Prozessorkern (core) 12 und Schnittstelle (I/O-unit) 11, wobei für die Schnittstelle 11 jede Ein-/Ausgabeeinheit verwendet werden kann. Sie werden mit einem schaltbaren Prozessorkerntakt CCLK bzw. einem Schnittstellentakt ICLK versorgt. Um das Mobilfunkgerät möglichst stromsparend zu betreiben, sollen alle nicht benötigten Einheiten umgehend abgeschaltet werden. Der Stromverbrauch kann durch das Abschalten von Versorgungstakten reduziert werden. Die Prozessoren 9, 10 besitzen verschiedene Betriebszustände, die durch die aktuelle Benutzung ihrer Teilblöcke 11, 12 gekennzeichnet werden. Im aktiven Betriebszustand (active mode) ist sowohl der Prozessorkerntakt CCLK als auch der Schnittstellentakt ICLK angeschaltet. Sobald ein Prozessorkern 12 erkennt, daß er für kurze Zeit (z.B. weniger als 1 TDMA-Rahmen nach dem GSM-Standard) nicht benötigt wird, oder er auf Daten von der Schnittstelle 11 wartet, schaltet er mittels eines entsprechenden Anforderungssignals den Prozessorkerntakt CCLK ab. Dieser Bereitschaftszustand (idle mode) wird softwaregesteuert eingenommen. Bei einem Interrupt von der noch getakteten Schnittstelle 11, beispielsweise beim Empfang von Daten, wird der Prozessorkerntakt CCLK wieder angeschaltet. Wenn der Prozessor 10 für längere Zeit (z.B. für einige TDMA-Rahmen nach dem GSM-Standard) nicht benötigt wird, nimmt er einen Ruhezustand (stop mode) ein, in dem durch ein Anforderungssignal sowohl der Prozessorkerntakt CCLK als auch der Schnittstellentakt ICLK abgeschaltet werden. In einem Schlafzustand (sleep mode) erlaubt der Prozessor 10 zusätzlich zum ähnlichen Ruhezustand, das weitere unabhängige oder externe Einheiten wie der Oszillator 5 abgeschaltet werden dürfen. Da kein schneller Versorgungstakt mehr angeschaltet ist, kann auch die Spannungsversorgung 4 für das Mobilfunkgerät mittels des externen Steuersignals EX4 auf einen geringeren Wert reduziert werden. Dadurch wird der Stromverbrauch im Mobilfunkgerät bis auf ein Minimum reduziert. Jedoch wird aufgrund von Einschwingvorgängen (Referenztakt REFCLK des Oszillators 5 und konstante Spannung von der Spannungsversorgung 4) eine längere Zeit aus dem Schlafzustand benötigt, bis sich der Prozessor 10 wieder im aktiven Zustand zur Verarbeitung von Daten befindet.

Der Wechsel von einem Betriebszustand, bei dem der Prozessorkerntakt CCLK und der Schnittstellentakt ICLK abgeschaltet sind, in den aktiven Betriebszustand erfolgt für jeden Prozessor durch einen separaten Aufwachzähler. Wenn der Prozessor 10 erkennt, daß er für eine bestimmte Zeitperiode nicht benötigt wird, wird der Aufwachzähler mit einem Aufwachwert beschrieben, der dieser Zeitperiode entspricht. Der Aufwachzähler wird dekrementiert und liefert bei einem Zählerstand "Null" ein Anforderungssignal für die Versorgungstakte CCLK und ICLK. Der Aufwachzähler ist dabei innerhalb des Prozessors 10 angeordnet, kann aber auch in der Steuereinheit 8 integriert oder separat realisiert werden. Wenn der Zählerstand "Null" erreicht ist, liefert die Steuereinheit 8 ein internes Steuersignal IN1 an die CGU 7, in der die Versorgungstakte angeschaltet werden. Zusätzlich können noch Register in der Steuereinheit 8 vorgesehen werden, deren Inhalt jeweils mit einem bestimmten Zählerstand programmiert wird. Ein Vergleicher erzeugt bei Übereinstimmung des Inhalts mit dem Zählerstand des Aufwachzählers ein Anforderungssignal für bestimmte Versorgungstakte. Zum Aufwachen aus dem Schlafzustand werden im Ausführungsbeispiel zwei Register vorgesehen, die mit einem Wert programmiert wird, der 3 bzw. 7 TDMA-Rahmenlängen beim Mobilfunk nach GSM-Standard entspricht. Damit wird 7 Rahmenlängen vor dem Anschalten von Prozessorkerntakt CCLK und Schnittstellentakt ICLK der Oszillator 5 durch das externe Steuersignal EX1 eingeschaltet, so daß der Referenztakt REFCLK einschwingen kann. 3 Rahmenlängen bevor der Prozessor in den aktiven Zustand versetzt wird, wird die Spannungsversorgung für den gekoppelten Speicher 6 eingeschaltet.

## Patentansprüche

1. Mobilfunkgerät mit wenigstens einem Steuerungsprozessor (10) und wenigstens einem Signalverarbeitungsprozessor (9), die wenigstens zeitweise nicht in einem aktiven Betriebszustand sind,
dadurch gekennzeichnet,
daß eine Steuereinheit (8) zur Auswahl von Betriebszuständen wenigstens für den Steuerungsprozessor (10) und/oder den Signalverarbeitungsprozessor (9) vorgesehen ist.

2. Mobilfunkgerät nach Anspruch 1,
dadurch gekennzeichnet,
daß wenigstens der Steuerungsprozessor (10) oder der Signalverarbeitungsprozessor (9) aus wenigstens zwei Teilblöcken (11, 12) besteht und die Steuereinheit (8) zur Auswahl eines Betriebszustandes durch An-/Abschalten wenigstens eines Teilblockes (11/12) vorgesehen ist.

3. Mobilfunkgerät nach Anspruch 2,
dadurch gekennzeichnet,
daß wenigstens der Steuerungsprozessor (10) oder der Signalverarbeitungsprozessor (9) zur Übertragung von Anforderungssignalen über Signalbusse (S1, S2) an die Steuereinheit (8) vorgesehen ist.

4. Mobilfunkgerät nach Anspruch 3,
dadurch gekennzeichnet,
daß die Steuereinheit (8) in Abhängigkeit von den Anforderungssignalen zur Auswahl der Betriebszustände durch An-/Abschalten von Versorgungstakten (ICLK, CCLK) für die Teilblöcke (11, 12) vorgesehen ist.

5. Mobilfunkgerät nach Anspruch 4,
dadurch gekennzeichnet,
daß wenigstens ein Prozessor (9/10) aus wenigstens einem, mit einem Prozessorkerntakt (CCLK) versorgten Prozessorkern (12) und wenigstens einer, mit einem Schnittstellentakt (ICLK) versorgten Schnittstelle (11) als Teilblöcke besteht.

6. Mobilfunkgerät nach Anspruch 5,
dadurch gekennzeichnet,
daß wenigstens ein Aufwachzähler zur Überwachung eines, durch abgeschalteten Prozessorkerntakt (CCLK) und Schnittstellentakt (ICLK) gekennzeichneten Betriebszustandes wenigstens eines Prozessors (9/10) und zum Senden eines entsprechenden Anforderungssignales zum Wechsel in einen, durch angeschalteten Prozessorkerntakt (CCLK) und Schnittstellentakt (ICLK) gekennzeichneten Aktivzustand wenigstens eines Prozessors (9/10) vorgesehen ist.

7. Mobilfunkgerät nach Anspruch 6,
dadurch gekennzeichnet,
daß die Steuereinheit (8) bei abgeschaltetem Prozessorkerntakt (CCLK) und Schnittstellentakt (ICLK) für alle gekoppelten Prozessoren (9, 10) zum Abschalten eines Referenztaktes (REFCLK) vorgesehen ist.
